# EUROPEAN PATENT APPLICATION

(11) **EP 3 925 813 A2**
(43) Date of publication of application: **22.12.2021**
(21) Application number: 21178182.8
(22) Date of filing: 08.06.2021
(51) Int. Cl.: B60L 1/00, B60L 50/15, B60L 50/16, B60L 50/62, B60L 50/61, B60L 50/60, B60L 58/19, B60L 58/21, B60L 58/22, H02M 7/487, B60L 53/80

(54) **VEHICLE DRIVE SYSTEM**

(30) Priority: 19.06.2020 JP 2020106227
(71) Applicant: MAZDA MOTOR CORPORATION, Hiroshima 730-8670 (JP)
(72) Inventor: FURUKAWA, Akihiro, Fuchu-cho, Aki-gun, 730-8670 (JP); USAMI, Ikuo, Fuchu-cho, Aki-gun, 730-8670 (JP); HIRANO, Seiyo, Fuchu-cho, Aki-gun, 730-8670 (JP)
(74) Representative: Müller-Boré & Partner Patentanwälte PartG mbB

(57) **Abstract**

In a vehicle drive system using a motor for cruising, the connection node of serially-connected first and second batteries is grounded. The operation of an inverter is controlled so that the motor drive voltage is higher than the output voltage of each of the first and second batteries. The vehicle drive system is configured so that electric power can be supplied, from each of the first and second batteries, to an electric apparatus mounted in a vehicle other than the inverter.

## Description

### BACKGROUND

The present disclosure relates to a vehicle drive system that uses a motor for cruising and a battery.

A vehicle drive system for driving a motor for cruising by a high-voltage battery has been conventionally known. Since the power output of the motor depends on the current and the voltage (P = I · V · cosθ), to increase the output of the motor, it is effective to raise the voltage of the battery. In general, a high-voltage battery of 60V or higher is used for driving a motor for cruising.

In a device using a high-voltage battery, measures against high voltage are necessary for parts and wires of the device, and this leads to increase in cost and weight. For example, wires for connecting an inverter with the battery become large in size and heavy. Also, as connectors for the inverter and the battery, expensive ones resistant to high voltage must be used. On the other hand, since the current value required for attaining given motor output becomes smaller as the voltage is higher (P = I · V · cosθ), motor loss can be reduced (Ploss = R · I²). This improves the electric mileage of the vehicle. In recent years, a configuration having a higher-voltage battery is in the mainstream, placing higher priority on the merit of improving the electric mileage than the demerit of increasing the vehicle weight and cost.

Japanese Unexamined Patent Publication No. 2019-162964 discloses a configuration of a hybrid drive unit principally using the driving force of a motor. In this configuration, a low-voltage battery and a capacitor are serially connected, forming a high-voltage power supply for driving the motor.

In general, a capacitor can supply a larger current momentarily than a normal battery. In the configuration of the cited patent document, such a capacitor with good responsiveness is used for acceleration at the startup of a vehicle, for example. However, since a capacitor is small in energy density, it is difficult for the capacitor to supply electric power to the motor for a long time. It is therefore preferable to use a battery, not a capacitor, from the standpoint of securing the cruising distance.

An objective of the present disclosure is providing a vehicle drive system using a motor for cruising, capable of increasing the output of the motor, achieving long-time power supply to the motor, and making full use of the potential of the vehicle drive system while keeping the vehicle weight and cost from increasing.

### SUMMARY

The inventors of the present disclosure have attained the following findings as a result of experiments and examinations on the vehicle drive system having the configuration described above.

That is, in the above-described vehicle drive system, the connection node of serially connected first and second batteries is connected to the ground, to reduce the voltage output from the battery unit. Also, a 3-level inverter is used as the inverter, so that a motor drive voltage higher than the battery voltage is generated. It is therefore possible to implement a vehicle drive system with a reduced weight, low cost, and high motor output.

As a result of experiments by the present inventers, however, it has been found that the vehicle drive system having the above-described configuration fails to secure output performance as excellent as expected. From our examinations, the reason for this has been found to be variations in charged amount (SOC)/voltage between the batteries.

That is, with variations in charged amount/voltage between the batteries that supply power to the inverter, the amplitude of the motor drive voltage varies, causing torque fluctuations of the motor. In vehicle driving, torque fluctuations of the motor become a cause of greatly impairing driving comfort and therefore must be kept to a minimum. To keep torque fluctuations to a minimum, however, the inverter output is forced to be restricted to suit to one of the batteries lower in charged amount/voltage. This raises a problem of failing to make full use of the potential of the vehicle drive system.

The present inventors have thus attained the findings that, in order to adequately secure the motor output performance in the vehicle drive system having the above-described configuration, it is important to strike a balance in charged amount/voltage between the batteries that supply power to the inverter. Based on the findings, the present inventors have invented a configuration as described below.

That is, according to the present disclosure, the vehicle drive system includes: a motor that generates driving force for drive wheels; an inverter electrically connected to the motor; a battery unit that supplies electric power to the inverter; and a control unit that controls operation of the inverter, wherein the battery unit has first and second batteries, and a negative pole of the first battery and a positive pole of the second battery that are mutually connected are grounded, the control unit controls the operation of the inverter so that a voltage output from the inverter to the motor is higher than an output voltage of the first battery and also than an output voltage of the second battery, and the vehicle drive system is configured so that electric power can be supplied from each of the first and second batteries to an electric apparatus mounted in the vehicle other than the inverter.

With the above configuration, since the connection node of the serially-connected first and second batteries is grounded in the battery unit, a positive voltage of the same value as the output voltage of the first battery and a negative voltage of which the absolute value is the same as the output voltage of the second battery, with reference to the ground, are output from the battery unit. The operation of the inverter is controlled so that the motor drive voltage output from the inverter is higher than the output voltage of the first battery and also than the output voltage of the second battery. This makes it possible to increase the output of the motor while reducing the voltage of the output of the battery unit to keep the vehicle weight and cost from increasing. Moreover, since the configuration is made so that electric power can be supplied from each of the first and second batteries to an electric apparatus mounted in the vehicle other than the inverter, a problem of causing a difference in charged amount between the first and second batteries can be prevented. It is therefore possible to make full use of the potential of the vehicle drive system and adequately secure the motor output performance while keeping the torque fluctuations of the motor to a minimum.

The vehicle drive system described above may further include a battery switching circuit configured to be able to switch an electric power supply source for a given electric apparatus between the first battery and the second battery.

With the above configuration, since the power supply source for a given electric apparatus can be switched between the first battery and the second battery by the battery switching circuit, the charged amounts of the first and second batteries can be easily balanced.

The battery switching circuit may include a capacitor provided between first and second lines that are a pair of lines for supplying electric power to the given electric apparatus, a first switch provided between a positive pole of the first battery and the first line, a second switch provided between the positive pole of the second battery and the first line, a third switch provided between the negative pole of the first battery and the second line, and a fourth switch provided between a negative pole of the second battery and the second line.

Thus, the battery switching circuit that switches the batteries as the power supply source for a given electric apparatus from one to the other can be implemented by a simple configuration.

Further, the vehicle drive system described above may further include a controller that controls on/off of the first to fourth switches of the battery switching circuit, wherein the controller determines which of the first and second batteries has greater energy, if the first battery has greater energy than the second battery, operates to turn on the first and third switches and turn off the second and fourth switches, and if the second battery has greater energy than the first battery, operates to turn off the first and third switches and turn on the second and fourth switches.

With the above configuration, when the energy of the first battery is greater than that of the second battery, part of the energy of the first battery can be stored in the capacitor provided between the electric lines. Contrarily, when the energy of the second battery is greater than that of the first battery, part of the energy of the second battery can be stored in the capacitor.

The vehicle drive system described above may further include a DC/DC converter provided between the first and second lines, for converting a voltage between the first and second lines and outputting the converted voltage to an electric apparatus that operates at a power supply voltage different from that at which the given electric apparatus operates.

With the above configuration, the DC/DC converter can generate electric power of a voltage different from the voltage between the electric lines between which the capacitor is provided and supply the generated power.

The battery switching circuit may not supply electric power from the first battery or the second battery to the given electric apparatus when the vehicle is cruising by the motor.

With the above configuration, the charged amounts of the first and second batteries can be balanced without impairing the safety of motor cruising.

The first battery may have a plurality of serially-connected battery cells, and the vehicle drive system may include a cell balance circuit, provided for the first battery, that balances charged amounts of the plurality of battery cells by performing charge/discharge control between the plurality of battery cells.

With the above configuration, since the charged amounts of the battery cells in the first battery can be balanced by the cell balance circuit, the output of the first battery can be adequately secured.

Further, the first battery may output, from one of the plurality of battery cells, electric power of a voltage different from the output voltage of the first battery.

With the above configuration, electric power of the voltage of a battery cell, e.g., 12V, can be output from the first battery. This eliminates the necessity of providing a battery for supplying 12V power separately.

The battery unit may be configured so that third and fourth batteries each in a form of a cartridge are removably loaded, and the loaded third battery may be connected in parallel with the first battery and the loaded fourth battery may be connected in parallel with the second battery.

With the above configuration, the removable third and fourth batteries can be used as auxiliaries to the first and second batteries.

The inverter may be a multi-level inverter.

With the above configuration, the operation of the inverter can be easily controlled so that the voltage output from the inverter to the motor becomes higher than the output voltage of the first battery and also than the output voltage of the second battery.

The output voltages of the first and second batteries are each less than 60V, for example.

As described above, according to the present disclosure, in a vehicle drive system using a motor for cruising, it is possible to increase the output of the motor, achieve long-time power supply to the motor, and make full use of the potential of the vehicle drive system while keeping the vehicle weight and cost from increasing.

### BRIEF DESCRIPTION OF THE DRAWINGS

FIG. 1 shows an example of the layout of a vehicle drive system of an embodiment mounted in a vehicle.
FIG. 2 shows a configuration example of the vehicle drive system of the embodiment.
FIG. 3 shows a main circuit configuration for motor driving in the vehicle drive system of the embodiment.
FIG. 4 shows a main circuit configuration for motor driving according to a comparative example.
FIG. 5A shows a configuration outline of a 3-level inverter, and FIG. 5B shows an operation of the 3-level inverter.
FIG. 6 shows an inverter circuit of one phase of the 3-level inverter.
FIG. 7 shows a detailed operation diagram of the 3-level inverter.
FIG. 8 shows an example of a circuit configuration related to battery control in the vehicle drive system of the embodiment.
FIG. 9 shows a circuit configuration of a cell balance circuit in FIG. 8.
FIG. 10 is a flowchart showing the operation of a battery switching circuit.
FIG. 11 is a view showing the operation of supplying power from battery 1.
FIG. 12 is a view showing the operation of supplying power from battery 2.

### DETAILED DESCRIPTION

An illustrative embodiment will be described hereinafter in detail with reference to the accompanying drawings.

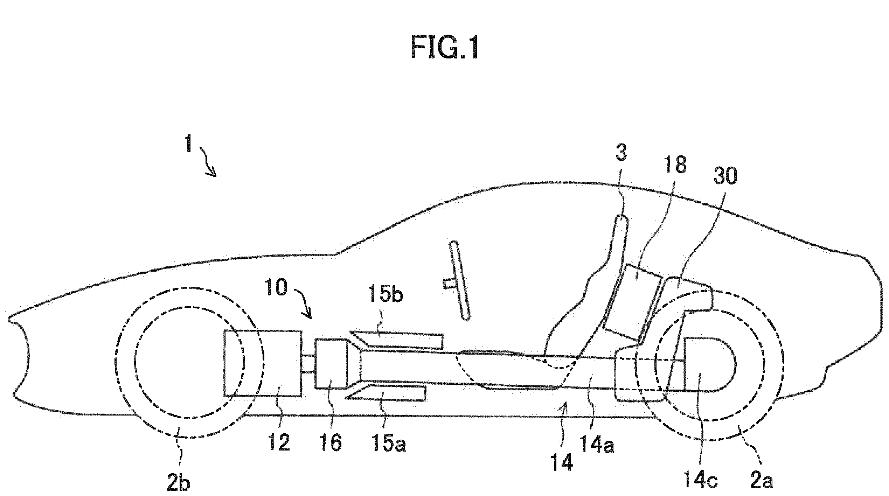

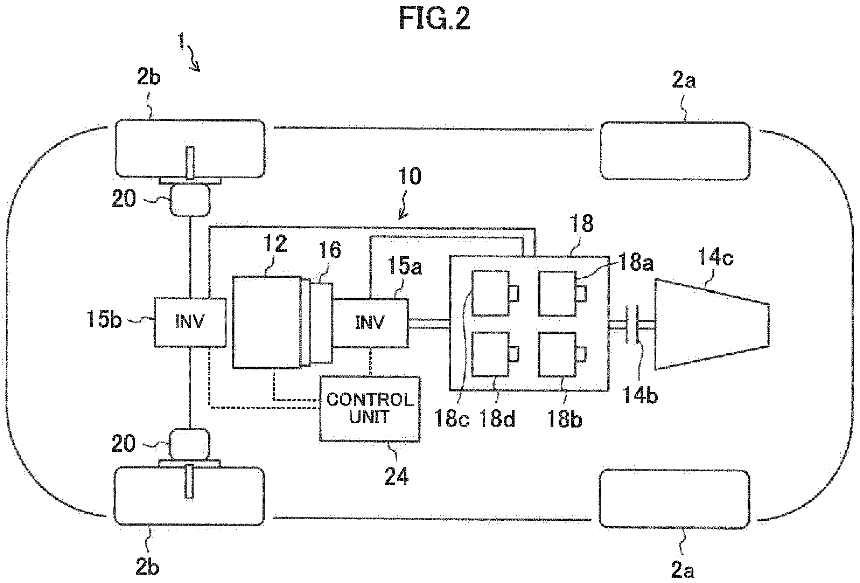

FIG. 1 shows an example of the layout of a vehicle drive system of this embodiment mounted in a vehicle, illustrated as a phantom view of the vehicle viewed from a side. FIG. 2 shows a configuration example of the vehicle drive system of this embodiment.

As shown in FIGS. 1 and 2, a vehicle drive system 10 is mounted in a vehicle 1. The vehicle drive system 10 includes: an engine 12 that drives rear wheels 2a; a force transmission mechanism 14 that transmits driving force to the rear wheels 2a; a main drive motor 16 that drives the rear wheels 2a; sub-drive motors 20 that drive front wheels 2b; an inverter 15a electrically connected to the main drive motor 16; an inverter 15b electrically connected to the sub-drive motors 20; a battery unit 18 that supplies electric power to the inverters 15a and 15b; a control unit 24; and a fuel tank 30 that stores fuel to be supplied to the engine 12. That is, the vehicle drive system 10 is a hybrid drive system.

The engine 12 is an internal combustion engine for generating driving force for the rear wheels 2a that are main drive wheels of the vehicle 1, which is a rotary engine in this embodiment. The engine 12 may otherwise be an engine other than the rotary engine, such as a reciprocating engine. The engine 12 is placed in the front part of the vehicle 1 and drives the rear wheels 2a through the force transmission mechanism 14.

The force transmission mechanism 14 is configured to transmit the driving force generated by the engine 12 to the rear wheels 2a that are the main drive wheels. The force transmission mechanism 14 includes a propeller shaft 14a connected to the engine 12, a clutch 14b, and a transmission 14c that is a stepped gearbox. The propeller shaft 14a extends from the engine 12 placed in the front part of the vehicle 1 toward the rear of the vehicle 1 through a propeller shaft tunnel (not shown). The rear end of the propeller shaft 14a is connected to the transmission 14c via the clutch 14b. An output axis of the transmission 14c is connected to axles (not shown) of the rear wheels 2a, to drive the rear wheels 2a.

The main drive motor 16 is an electric motor for generating driving force for the rear wheels 2a that are the main drive wheels of the vehicle 1, placed adjacent to the engine 12 on the rear side of the engine 12. The main drive motor 16 is serially connected with the engine 12, so that the driving force generated by the main drive motor 16 is also transmitted to the rear wheels 2a through the force transmission mechanism 14. In this embodiment, a 25 kW permanent magnet synchronous motor driven at 48V is used as the main drive motor 16.

The inverter 15a, placed adjacent to the main drive motor 16, converts DC electric power supplied from the battery unit 18 to AC electric power and supplies the power to the main drive motor 16.

The sub-drive motors 20 are electric motors for generating driving force for the front wheels 2b that are sub-drive wheels and, in this embodiment, are in-wheel motors housed in the front wheels 2b. In this embodiment, 17 kW induction motors are used as the sub-drive motors 20.

The inverter 15b converts DC electric power supplied from the battery unit 18 to AC electric power and supplies the power to the sub-drive motors 20.

The battery unit 18 is placed behind a seat 3 and in front of the fuel tank 30. In this embodiment, the battery unit 18 includes four batteries 18a, 18b, 18c, and 18d. Each of the batteries 18a to 18d, having an output voltage of 48V, includes four serially-connected 12V battery cells inside.

The batteries 18a and 18b are electrically connected in series and fixed in the battery unit 18. As will be described later, the connection node of the batteries 18a and 18b, i.e., the negative pole of the battery 18a and the positive pole of the battery 18b are connected to the ground, in common with the inverter 15a. The battery 18c is connected in parallel with the battery 18a, and the battery 18d is connected in parallel with the battery 18b. In this case, the batteries 18c and 18d are battery cartridges removably loaded into the battery unit 18. The battery unit 18 is configured so that, once the cartridge batteries 18c and 18d are loaded thereinto, the battery 18c is connected in parallel with the battery 18a and the battery 18d is connected in parallel with the battery 18b.

The control unit 24 is configured to control the engine 12, the inverter 15a electrically connected with the main drive motor 16, and the inverter 15b electrically connected with the sub-drive motors 20 whereby the vehicle 1 can execute an engine cruise mode and a motor cruise mode appropriately. Specifically, the control unit 24 can be constituted by a microprocessor, a memory, an interface circuit, and a program for actuating these (none of these is shown).

Switching control between the engine cruise mode and the motor cruise mode is performed as follows, for example. It is assumed that the vehicle 1 is provided with a switch for selecting the engine cruise mode or the motor cruise mode.

The mode is set at the motor cruise mode in which the vehicle cruises at a comparatively low speed, repeating start and stop, on a city street. In the motor cruise mode, the control unit 24 controls to supply electric power from the battery unit 18 to the inverter 15a to drive the main drive motor 16. Meanwhile, the control unit 24 controls not to supply fuel to the engine 12 to prevent the engine 12 from producing torque. In this case, the vehicle 1 purely functions as an electric vehicle (EV).

Even when the vehicle 1 is cruising at a speed higher than a given speed, the motor cruise mode is maintained as long as an acceleration of a given amount or greater is not exerted, and the vehicle 1 is driven by the main drive motor 16.

Assume here that the driver operates the switch to change the mode to the engine cruise mode and depresses the accelerator pedal. In the engine cruise mode, the control unit 24 starts supply of fuel to the engine 12, whereby the engine 12 produces torque. Meanwhile, the control unit 24 stops the control on the inverter 15a to stop the drive by the main drive motor 16. The driver then can enjoy a feeling of driving the vehicle 1 driven by the engine 12.

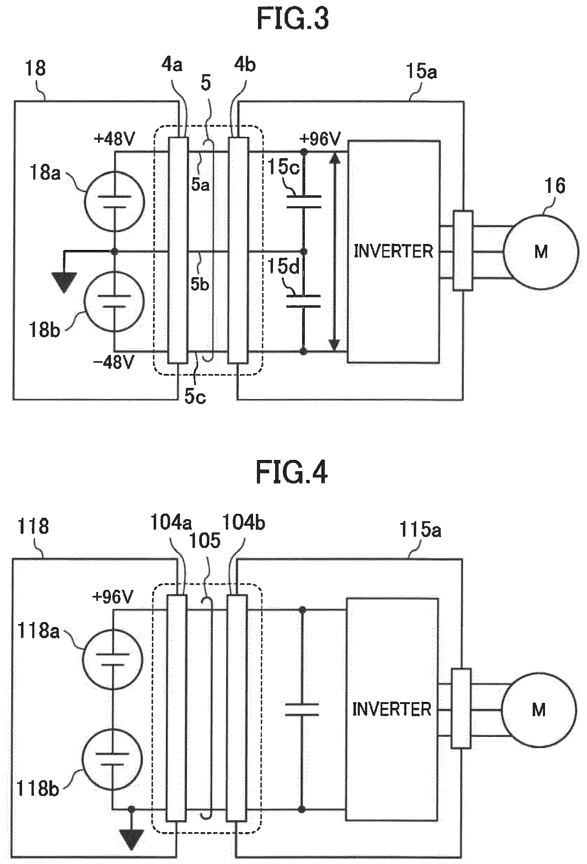

FIG. 3 shows a configuration of main circuits related to motor driving in the vehicle drive system of this embodiment. FIG. 4 shows a configuration of main circuits related to motor driving according to a comparative example.

As shown in FIG. 3, in this embodiment, a connector 4a of the battery unit 18 and a connector 4b of the inverter 15a are electrically connected through three wires 5 (5a, 5b, and 5c). In the battery unit 18, the batteries 18a and 18b are serially connected, and their connection node, i.e., the negative pole of the battery 18a and the positive pole of the battery 18b are connected to the ground. The wire 5a is connected to the positive pole of the battery 18a, the wire 5b is connected to the negative pole of the battery 18a and the positive pole of the battery 18b, and the wire 5c is connected to the negative pole of the battery 18b. That is, voltages of ±48V are output from the battery unit 18.

In the inverter 15a, capacitors 15c and 15d are serially connected, and their connection node is connected to the wire 5b. The other end of the capacitor 15c is connected to the wire 5a, and the other end of the capacitor 15d is connected to the wire 5c. That is, a voltage of 96 V is applied to the capacitors 15c and 15d.

Safety measures against high voltage are basically unnecessary for a low voltage less than 60V, and low-cost elements and parts can be used. Specifically, in the configuration of FIG. 3, inexpensive ones for low voltage can be used as the connectors 4a and 4b and the wires 5. Also, the weight of harnesses, etc. can be widely reduced.

On the contrary, in the configuration of FIG. 4, in a battery unit 118, batteries 118a and 118b are serially connected, and a voltage at both ends thereof, 96 V, is output from the battery unit 118. Therefore, as a connector 104a in the battery unit 118 and a connector 104b in an inverter 115a, high voltage-support ones must be used. Also, as wires 105 for connecting the connectors 104a and 104b, expensive and heavy ones for high voltage must be used.

In other words, in the configuration of this embodiment, since the connection node of the serially-connected batteries 18a and 18b is grounded in the battery unit 18, a positive voltage of the same value as the output voltage of the battery 18a and a negative voltage of which the absolute value is the same as the output voltage of the battery 18b, with reference to the ground, are output from the battery unit 18. This decreases the voltage of the output of the battery unit 18, and thus can keep the vehicle weight and cost from increasing.

Further, in this embodiment, to attain a motor drive voltage higher than the battery voltage 48V, a 3-level inverter is used as the inverter 15a.

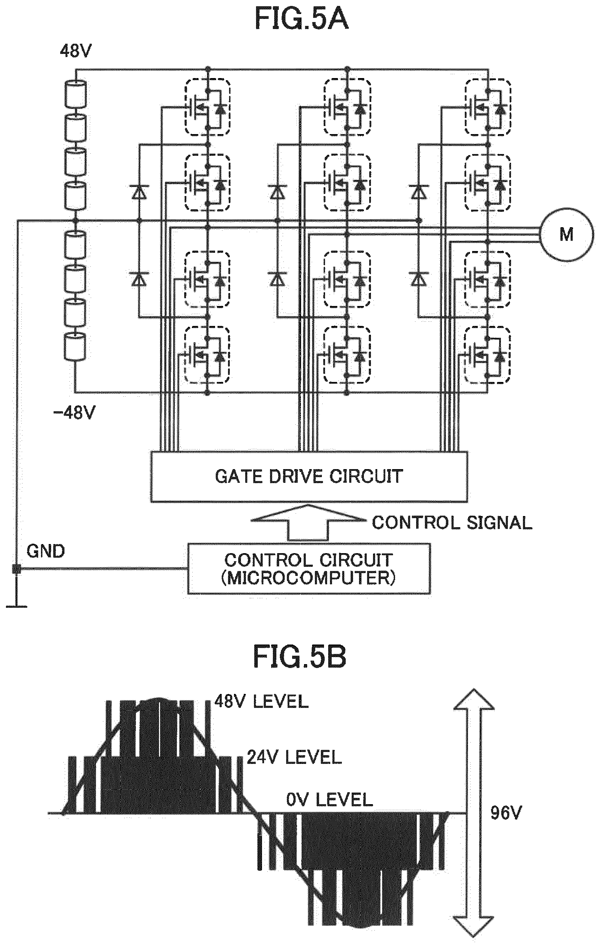

FIGS. 5A and 5B are views showing an outline of a 3-level inverter, where FIG. 5A shows a circuit configuration and FIG. 5B shows a waveform of the output voltage. As shown in FIG. 5A, in a 3-level inverter, two serially-connected switching elements are placed in each of the positive side and the negative side. For control of a 3-phase motor, a total of 12 (2 × 2 × 3) switching elements are necessary. When ±48V are given as the battery voltages, a motor drive voltage of 96 V can be generated by controlling the switching elements, as shown in FIG. 5B. As the switching elements, MOSFETs low in withstand voltage compared to IGBTs can be used.

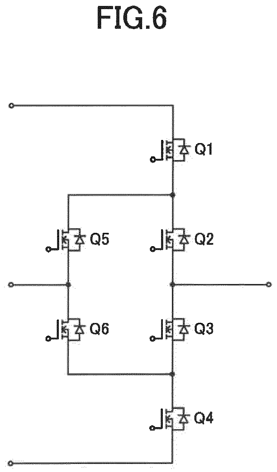

FIG. 6 shows a configuration example of an inverter circuit corresponding to one phase. In FIG. 6, the connection node between switching elements Q5 and Q6 is connected to the ground. To the switching element Q5, the same drive signal given to a switching element Q3 is given, and to the switching element Q6, the same drive signal given a switching element Q2 is given.

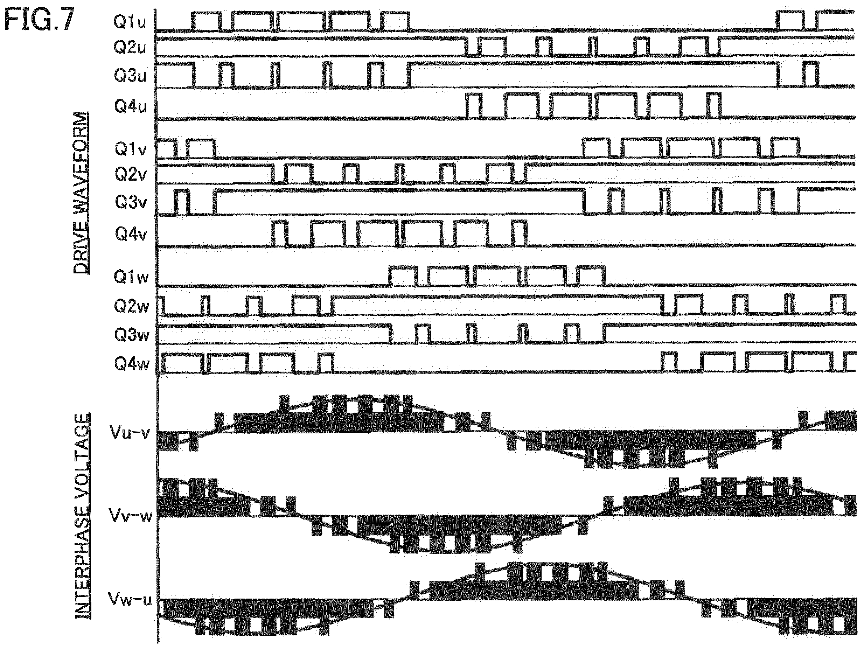

FIG. 7 shows examples of drive waveforms for switching elements in each phase and interphase voltages. As shown in FIG. 7, the difference between voltages in two phases driven according to the drive waveforms is to be an interphase voltage between the two phases. For example, the difference between the voltage in u phase driven according to drive waveforms Q1u to Q4u and the voltage in v phase driven according to drive waveforms Q1v to Q4v is to be an interphase voltage Vu-v. By controlling the inverter as shown in FIG. 7, a motor drive voltage of 96 V can be generated from the battery voltages of ±48V, for example.

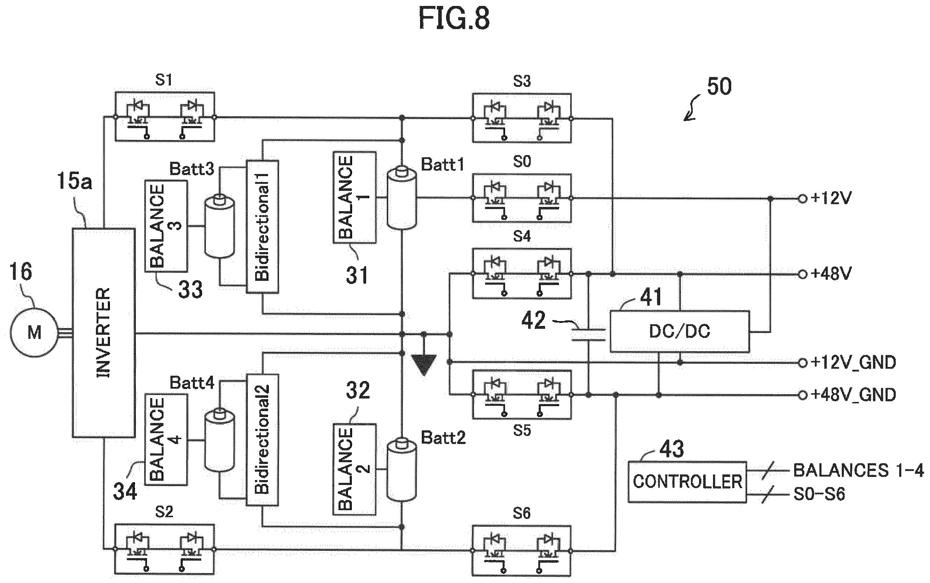

FIG. 8 shows an example of a circuit configuration related to battery control in the vehicle drive system of this embodiment. In the configuration of FIG. 8, Batt1, Batt2, Batt3, and Batt4 are each 48V batteries and respectively correspond to the batteries 18a, 18b, 18c, and 18d in the configuration of FIG. 2. The negative pole of the battery Batt1 and the positive pole of the battery Batt2 are connected, and their connection node is grounded (a neutral point). The battery Batt3 is connected in parallel with the battery Battl, and the battery Batt4 is connected in parallel with the battery Batt2. The batteries Batt3 and Batt4 may be omitted.

A switch S1 is inserted between the positive pole of the battery Batt1 and the inverter 15a, and a switch S2 is inserted between the negative pole of the battery Batt2 and the inverter 15a.

In the configuration of FIG. 8, it is made possible to supply 48V power from each of the batteries Batt1 and Batt2 to electric components inside the vehicle 1. It is also made possible to supply 12V power from the battery Batt1 to electric components inside the vehicle 1. A DC/DC converter 41 and a capacitor 42 are provided between a 48V power line and a grounding line. The DC/DC converter 41 converts 48V power charged into the capacitor 42 from the batteries Batt1 and Batt2 to 12V power and outputs the converted power.

A switch S3 is inserted between the positive pole of the battery Batt1 and the 48V power line. A switch S4 is inserted between the positive pole of the battery Batt2 and the 48V power line. A switch S5 is inserted between the negative pole of the battery Batt1 and a 48V-power grounding line. A switch S6 is inserted between the negative pole of the battery Batt2 and the 48V-power grounding line. Also, a switch S0 is inserted between the positive pole of one battery cell in the battery Batt1 and a 12V power line. The switches S0 to S6 are constituted by MOSFETs, for example.

The switches S3 to S6 and the capacitor 42 constitute a battery switching circuit 50 configured to be able to switch the batteries that are to be a 48V power supply source for a given electric apparatus from one to the other. The operation of the battery switching circuit 50 will be described later.

Cell balance circuits 31, 32, 33, and 34 (indicated as balances 1 to 4 in FIG. 8) are respectively provided for the batteries Batt1, Batt2, Batt3, and Batt4. The cell balance circuits 31 to 34 have a function of balancing the charged amounts of battery cells in the corresponding batteries.

A controller 43 performs on/off control of the switches S0 to S6 and control of the cell balance circuits 31 to 34. The controller 43 can be constituted by a microprocessor, a memory, an interface circuit, and programs for actuating these. The controller 43 may be configured integrally with the control unit 24 shown in FIG. 2 or separately from it.

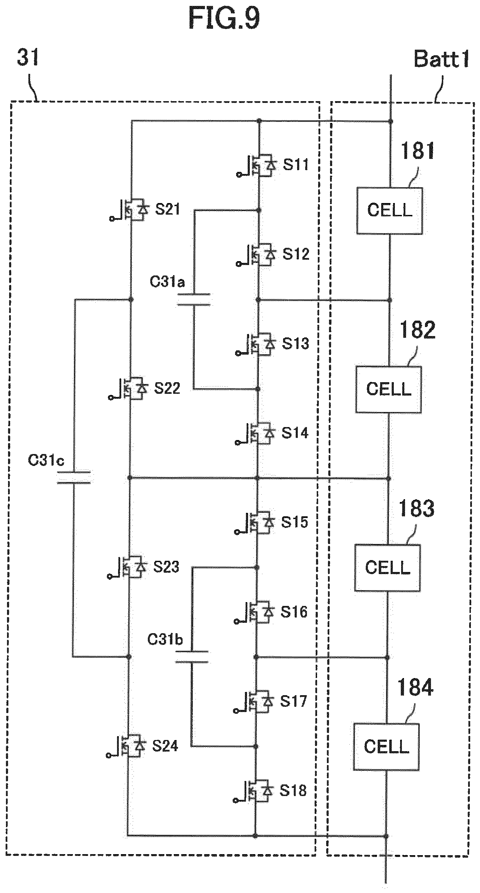

FIG. 9 shows a circuit configuration example of the cell balance circuit 31. Note that the cell balance circuits 32 to 34 may have a similar circuit configuration to that of FIG. 9. The battery Batt1 includes four serially-connected battery cells 181 to 184. The cell balance circuit 31 of FIG. 9 includes switches S11 to S14 and a capacitor C31a as a configuration for balancing the charged amounts of the battery cells 181 and 182. The cell balance circuit 31 also includes switches S15 to S18 and a capacitor C31b as a configuration for balancing the charged amounts of the battery cells 183 and 184. Further, the cell balance circuit 31 includes switches S21 to S24 and a capacitor C31c as a configuration for balancing the charged amount of the battery cells 181 and 182 and the charged amount of the battery cells 183 and 184.

The cell balance circuit 31 of FIG. 9 operates as follows. In balancing the charged amounts of the battery cells 181 and 182, first, the voltage amounts and current amounts of the battery cells 181 and 182 are acquired, and which of the battery cells 181 and 182 has greater energy is determined. If the battery cell 181 has greater energy, the switches S11 and S13 are turned on and the switches S12 and S14 are turned off, to transfer the energy of the battery cell 181 to the capacitor C31a. After the lapse of a given time, the switches S11 and S13 are turned off and the switches S12 and S14 are turned on, to transfer the energy in the capacitor C31a to the battery cell 182. Contrarily, if the battery cell 182 has greater energy, the switches S11 and S13 are turned off and the switches S12 and S14 are turned on, to transfer the energy of the battery cell 182 to the capacitor C31a. After the lapse of a given time, the switches S11 and S13 are turned on and the switches S12 and S14 are turned off, to transfer the energy in the capacitor C31a to the battery cell 181.

In balancing the charged amounts of the battery cells 183 and 184, transfer of energy between the battery cells 183 and 184 may be performed via the capacitor C31b in a manner similar to the operation described above. Also, in balancing the charged amount of the battery cells 181 and 182 and the charged amount of the battery cells 183 and 184, transfer of energy between the battery cells 181 and 182 and the battery cells 183 and 184 may be performed via the capacitor C31c in a manner similar to the operation described above.

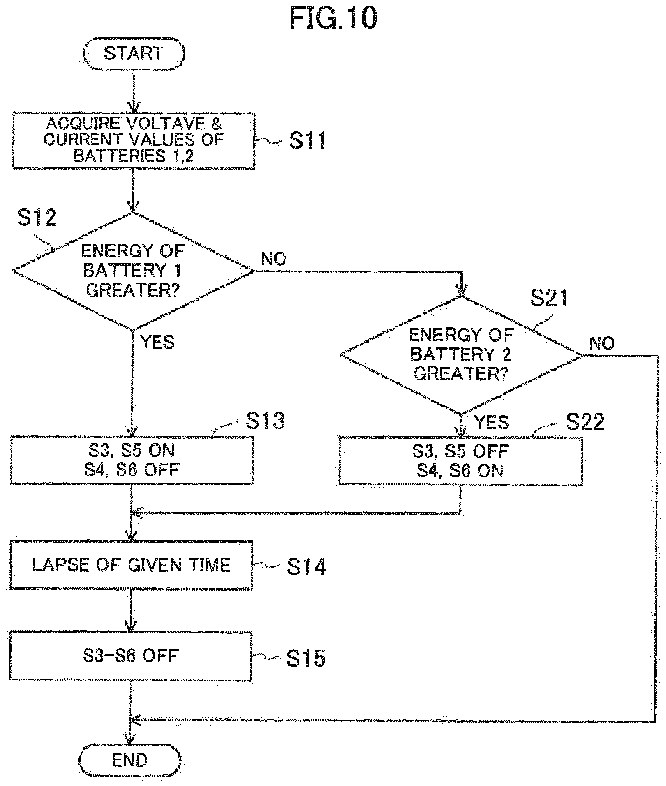

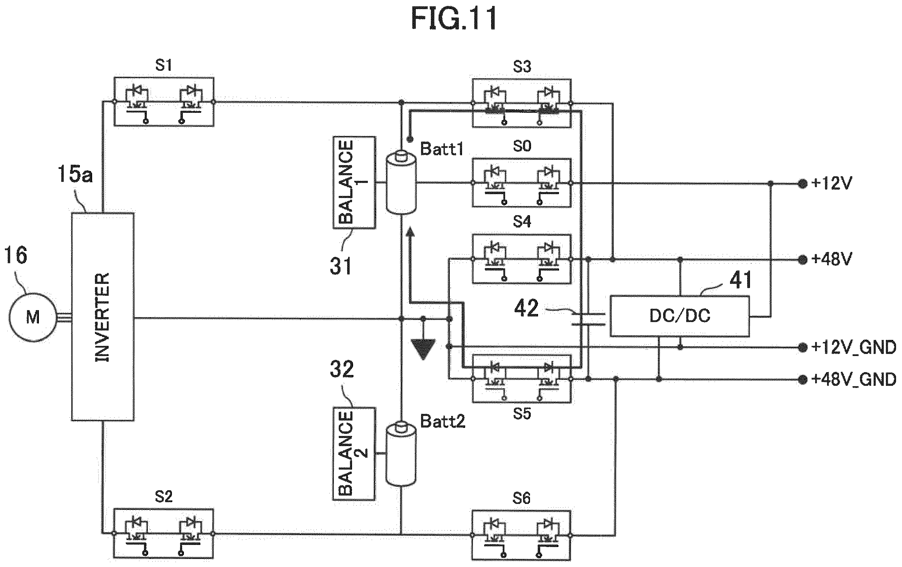

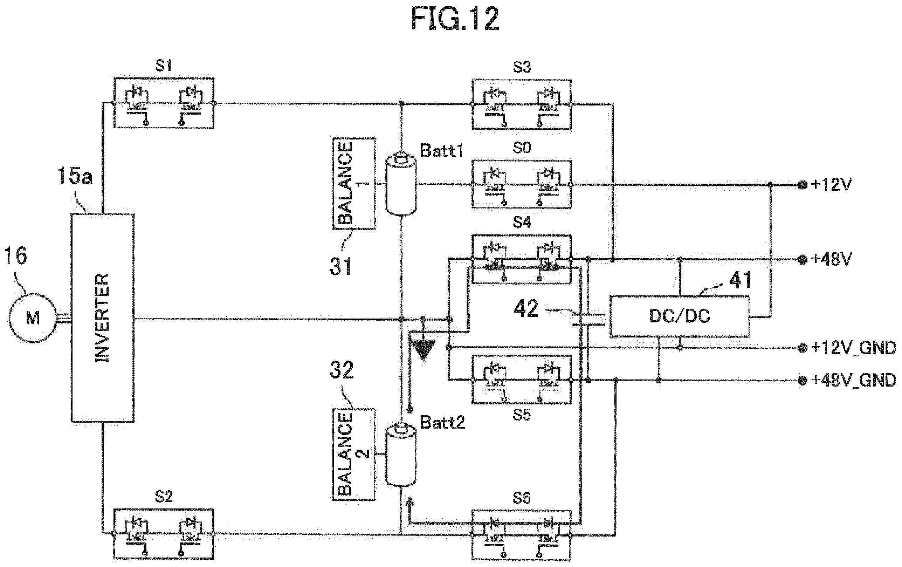

The operation of the battery switching circuit 50 will be described hereinafter. FIG. 10 is a flowchart showing the operation of the battery switching circuit 50. FIG. 11 shows an operation of supplying 48V power from the battery Batt1, and FIG. 12 shows an operation of supplying 48V power from the battery Batt2. Note that, in FIGS. 11 and 12, illustration of the batteries Batt3 and Batt4 and components related to these batteries is omitted for simplification of the drawings.

At the start of the operation of the battery switching circuit 50, the controller 43 acquires the voltage values and current values of the batteries Batt1 and Batt2 (step S11), and determines which of the batteries Batt1 and Batt2 has greater energy.

If the battery Batt1 has greater energy than the battery Batt2 (YES in step S12), the battery switching circuit 50 operates to supply 48V power from the battery Batt1. That is, the controller 43 turns on the switches S3 and S5 and turns off the switches S4 and S6 in the battery switching circuit 50 (step S13). By this switching, as shown in FIG. 11, the energy of the battery Batt1 starts to be transferred to the capacitor 42. After the lapse of a given time (step S14), the controller 43 turns off the switches S3 to S6 (step S15). By this, part of the energy of the battery Batt1 is stored in the capacitor 42.

Contrarily, if the battery Batt2 has greater energy than the battery Batt1 (YES in step S21), the battery switching circuit 50 operates so that 48V power is supplied from the battery Batt2. That is, in the battery switching circuit 50, the controller 43 turns off the switches S3 and S5 and turns on the switches S4 and S6 (step S22). By this switching, as shown in FIG. 12, the energy of the battery Batt2 starts to be transferred to the capacitor 42. After the lapse of a given time (step S14), the controller 43 turns off the switches S3 to S6 (step S15). By this, part of the energy of the battery Batt2 is stored in the capacitor 42.

The energy stored in the capacitor 42 is supplied as 48V power, or as 12V power after being converted by the DC/DC converter 41, inside the vehicle 1.

The given time during which energy from the battery Batt1 or Batt2 is stored in the capacitor 42 may be determined in advance based on the capacity of the capacitor 42 and the capacities of the batteries Batt1 and Batt2.

The battery switching circuit 50 is preferably operated when the vehicle 1 is in the engine cruise mode. That is, it is preferable for the battery switching circuit 50 not to perform power supply from the batteries Batt1 and Batt2 to electric components in the vehicle 1 when the vehicle 1 is cruising by the motor 16.

In the configuration of FIG. 8, the cell balance circuits 31 to 34 may be omitted. In the battery Batt1, however, since 12V power is output from one battery cell, the charged amounts may be unbalanced among the battery cells. It is therefore preferable to provide the cell balance circuit 31 for the battery Batt1.

As described above, according to this embodiment, the vehicle drive system 10 includes the motor 16 that generates driving force for the drive wheels 2a, the inverter 15a electrically connected to the motor 16, the battery unit 18 that supplies electric power to the inverter 15a, and the control unit 24 that controls the operation of the inverter 15a. In the battery unit 18, since the connection node of the serially-connected batteries Batt1 and Batt2 is grounded, a positive voltage of the same value as the output voltage of the battery Batt1 and a negative voltage of which the absolute value is the same as the output voltage of the battery Batt2, with reference to the ground, are output from the battery unit 18. The inverter 15a is a 3-level inverter, and the operation thereof is controlled so that the motor drive voltage output from the inverter 15a is higher than the output voltage of the battery Batt1 and also than the output voltage of the battery Batt2. By this control, it is possible to increase the output of the motor 16 while reducing the voltage of the output of the battery unit 18 thereby keeping the vehicle weight and cost from increasing.

Further, the vehicle drive system 10 includes the battery switching circuit 50 configured to be able to switch the power supply source for a given electric apparatus between the battery Batt1 and the battery Batt2. With this, the charged amounts of the batteries Batt1 and Batt2 can be easily balanced. It is therefore possible to make full use of the potential of the vehicle drive system 10 and adequately secure the motor output performance while keeping the torque fluctuations of the motor to a minimum.

While the battery switching circuit 50 is provided in this embodiment to be able to switch the batteries as the power supply source for a given electric apparatus from one to the other, the present disclosure may be configured not to have the battery switching circuit 50. For example, electric power may be supplied from the batteries Batt1 and Batt2 to different electric apparatuses, such as supplying power from the battery Batt1 to an audio-related apparatus while supplying power from the battery Batt2 to headlights. With such a configuration, also, a problem of causing a difference in charged amount between the batteries Batt1 and Batt2 can be prevented. It is therefore possible to make full use of the potential of the vehicle drive system 10 and adequately secure the motor output performance while keeping the torque fluctuations to a minimum.

While the inverter 15a is a 3-level inverter in this embodiment, the present disclosure is not limited to this. For example, the inverter 15a may be a multi-level inverter such as a 4-level inverter and a 5-level inverter. Otherwise, the inverter 15a may be an inverter that is not a multi-level inverter but of which the operation is controlled so that the motor drive voltage output therefrom is higher than the output voltage of the battery Batt1 and also than the output voltage of the battery Batt2.

Also, while the battery unit 18 includes the batteries 18a and 18b fixed in the vehicle 1 and the removable cartridge batteries 18c and 18d in this embodiment, the number of batteries and the forms thereof are not limited to these. For example, the battery unit may include two batteries fixed in the vehicle and no cartridge batteries. Otherwise, one or both of the batteries 18a and 18b may be provided as cartridge batteries.

The voltage of each battery, the number of battery cells constituting the battery, and the voltage of each battery cell are not limited to those described in this embodiment. It is however preferable that the output voltage of each battery is less than 60V, from the standpoint of the objective of the present disclosure of reducing the output voltage of the battery unit to keep the vehicle weight and cost from increasing.

While description has been made assuming that the vehicle drive system of this embodiment is a hybrid drive system, the present disclosure may also be applied to a motor drive system.

It is to be understood that the above-described embodiment is a mere illustration and the scope of the present disclosure should not be construed restrictively. It is also to be understood that the scope of the present disclosure is defined by the appended claims, and that all changes and modifications belonging to the equivalent scope of the claims will fall within the scope of the present disclosure.

## Claims

1. A vehicle drive system (10), comprising:
a motor (16) that generates driving force for drive wheels (2a);
an inverter (15a, 15b) electrically connected to the motor (16);
a battery unit (18) that supplies electric power to the inverter (15a, 15b); and
a control unit (24) that controls operation of the inverter,
wherein
the battery unit (18) has first and second batteries (18a, 18b), and a negative pole of the first battery (18a, Batt1) and a positive pole of the second battery (18b, Batt2) that are mutually connected are grounded,
the control unit (24) controls the operation of the inverter (15a, 15b) so that a voltage output from the inverter (15a, 15b) to the motor (12) is higher than an output voltage of the first battery (18a, Batt1) and also than an output voltage of the second battery (18b), and
the vehicle drive system (10) is configured so that electric power can be supplied from each of the first and second batteries (18a, 18b) to an electric apparatus mounted in the vehicle other than the inverter (15a, 15b).

2. The vehicle drive system (10) of claim 1, further comprising
a battery switching circuit (50) configured to be able to switch an electric power supply source for a given electric apparatus between the first battery (18a, Batt1) and the second battery (18b, Batt2).

3. The vehicle drive system (10) of claim 2, wherein
the battery switching circuit (50) includes
a capacitor (42) provided between first and second lines that are a pair of lines for supplying electric power to the given electric apparatus,
a first switch (S3) provided between a positive pole of the first battery (18a, Batt1) and the first line,
a second switch (S4) provided between the positive pole of the second battery (18b, Batt2) and the first line,
a third switch (S5) provided between the negative pole of the first battery (18a, Batt1) and the second line, and
a fourth switch (S6) provided between a negative pole of the second battery (18b, Batt2) and the second line.

4. The vehicle drive system (10) of claim 3, further comprising
a controller (43) that controls on/off of the first to fourth switches (S3, S4, S5, S6) of the battery switching circuit (50),
wherein
the controller (43) determines which of the first (18a, Batt1) and second (18b, Batt2) batteries has greater energy,
if the first battery (18a, Batt1) has greater energy than the second battery (18b, Batt2), operates to turn on the first (S3) and third (S5) switches and turn off the second (S4) and fourth (S6) switches, and
if the second battery (18b, Batt2) has greater energy than the first battery (18a, Batt1), operates to turn off the first (S3) and third (S5) switches and turn on the second (S4) and fourth (S6) switches.

5. The vehicle drive system (10) of claim 3, further comprising
a DC/DC converter (41) provided between the first and second lines, for converting a voltage between the first and second lines and outputting the converted voltage to an electric apparatus that operates at a power supply voltage different from that at which the given electric apparatus operates.

6. The vehicle drive system (10) of claim 2, wherein
the battery switching circuit (50) does not supply electric power from the first battery (18a, Batt1) or the second battery (18b, Batt2) to the given electric apparatus when the vehicle is cruising by the motor (16).

7. The vehicle drive system (10) of claim 1, wherein
the first battery (18a, Batt1) has a plurality of serially-connected battery cells, and
the vehicle drive system (10) includes a cell balance circuit (31), provided for the first battery (18a, Batt1), that balances charged amounts of the plurality of battery cells by performing charge/discharge control between the plurality of battery cells.

8. The vehicle drive system (10) of claim 7, wherein
the first battery outputs, from one of the plurality of battery cells, electric power of a voltage different from the output voltage of the first battery (18a, Batt1).

9. The vehicle drive system (10) of claim 1, wherein
the battery unit (18) is configured so that third (18c, Batt3) and fourth (18d, Batt4) batteries each in a form of a cartridge are removably loaded, and the loaded third battery (18c, Batt3) is connected in parallel with the first battery (18a, Batt1) and the loaded fourth battery (18d, Batt4) is connected in parallel with the second battery (18b, Batt2).

10. The vehicle drive system (10) of claim 1, wherein
the inverter (15a, 15b) is a multi-level inverter;
or wherein the output voltages of the first (18a, Batt1) and second (18b, Batt2) batteries are each less than 60V.

11. The vehicle drive system (10) of any one of claims 1 to 10, further comprising:
an engine (12) that drives rear wheels (2a); and
a force transmission mechanism (14) that transmits driving force to the rear wheels (2a),
wherein
the motor (16) includes a main drive motor (16) that drives the rear wheels (2a) and a sub-drive motor (20) that drives front wheels (2b),
the inverter (15a, 15b) includes a first inverter (15a) electrically connected to the main drive motor (16) and a second inverter (15b) electrically connected to the sub-drive motor (20),
the batteries (18a, Batt1, 18b, Batt2) supply electric power to the first and second inverters (15a, 15b), and
the control unit (24) controls the engine (12) and the first and second inverters (15a, 15b).

12. The vehicle drive system (10) of claim 11, wherein
the engine (12) is a rotary engine and placed in a front part of the vehicle.

13. The vehicle drive system (10) of claim 11 or 12, wherein
the main drive motor (16) is placed to be adjacent to the engine (12) on the rear side of the engine (16).

14. The vehicle drive system (10) of any one of claims 11 to 13, wherein
the sub-drive motor (20) is an in-wheel motor housed in each of the front wheels (2a, 2b).

15. The vehicle drive system (10) of any one of claims 11 to 14, wherein
a switch for selecting an engine cruise mode or a motor cruise mode is provided in the vehicle, and
the control unit (24) controls so that
in the motor cruise mode, while electric power from the battery unit is supplied to the first inverter (15a) to drive the main drive motor (20), no fuel is supplied to the engine (12), and
in the engine cruise mode, while fuel is supplied to the engine, control of the first inverter (15a) is stopped to stop driving by the main drive motor (20).
